# EUROPÄISCHE PATENTSCHRIFT

(11) **EP 0 656 921 B1**
(45) Veröffentlichungstag und Bekanntmachung des Hinweises auf die Patenterteilung: **23.10.1996**
(21) Anmeldenummer: 93917797.8
(22) Anmeldetag: 17.08.1993
(51) Int. Cl.: C09D 4/06

(54) **PULVERLACKE**
COATING POWDER
LAQUES EN POUDRE

(30) Priorität: 26.08.1992 DE 4228401
(43) Veröffentlichungstag der Anmeldung: 14.06.1995
(73) Patentinhaber: BASF Lacke + Farben AG, 48165 Münster-Hiltrup (DE)
(72) Erfinder: KRANIG, Wolfgang, D-48308 Senden (DE); CIBURA, Klaus, D-48167 Münster (DE); WOLTERING, Joachim, D-48145 Münster (DE); HILGER, Christopher, D-48151 Münster (DE); RADEMACHER, Josef, D-48165 Münster (DE)
(86) Internationale Anmeldenummer: EP9302187
(87) Internationale Veröffentlichungsnummer: WO9404615

(56) Entgegenhaltungen:
- DE-A- 3 836 370
- FR-A- 2 030 505
- GB-A- 2 055 860
- US-A- 3 660 371

## Beschreibung

Die Erfindung betrifft Pulverlacke, die Lackfilme mit ausgezeichneten Eigenschaften, insbesondere Lackfilme mit hoher Flexibilität und hoher Härte liefern.

Pulverlacke sind bekannt. Da sie keine Lösemittel enthalten, kann mit ihnen besonders umweltschonend lackiert werden. Die mit Pulverlacken herstellbaren Lackfilme sind jedoch in ihren Eigenschaften noch weiter verbesserungsbedürftig.

Die der vorliegenden Erfindung zugrundeliegende Aufgabenstellung besteht in der Bereitstellung von neuen Pulverlacken, mit denen Lackfilme herstellbar sind, die gegenüber dem Stand der Technik verbesserte Eigenschaften, insbesondere höhere Flexibilität und höhere Härte aufweisen.

Diese Aufgabe wird überraschenderweise durch Bereitstellung von Pulverlacken gelöst, die als filmbildendes Material eine Mischung aus
(A) 19,9 bis 90,0 Gewichtsprozent eines gegebenenfalls ethylenisch ungesättigte Doppelbindungen enthaltenden epoxidgruppenhaltigen Kunstharzes oder einer Mischung aus solchen epoxidgruppenhaltigen Kunstharzen
(B) 9,9 bis 80,0 Gewichtsprozent einer gegebenenfalls ethylenisch ungesättigte Doppelbindungen enthaltenden carboxylgruppenhaltigen Verbindung oder einer Mischung aus solchen carboxylgruppenhaltigen Verbindungen
(C) 0 bis 20 Gewichtsprozent einer von (A) und (B) verschiedenen, ethylenisch ungesättigte Doppelbindungen enthaltenden Verbindung oder einer Mischung aus solchen Verbindungen und
(D) 0,1 bis 3,0 Gewichtsprozent eines Initiators für Radikalkettenpolymerisationen oder einer Mischung aus Initiatoren für Radikalkettenpolymerisationen
enthalten, wobei die Gewichtsprozentangaben auf (A) + (B) + (C) + (D) = 100 Gew.-% bezogen sind und die Mischung aus Komponenten (A), (B), (C) und (D) 0,1 bis 6,0 Mol ethylenisch ungesättigte Doppelbindungen pro 1000 g Mischung enthält.

Mit den erfindungsgemäß bereitgestellten Pulverlacken können überraschenderweise Lackfilme hergestellt werden, die gegenüber dem Stand der Technik verbesserte Eigenschaften, insbesondere höhere Flexibilitäten und höhere Härten aufweisen.

In der EP-A-38 635 werden Pulverlacke beschrieben, die als filmbildendes Material ein epoxidgruppenhaltiges Kunstharz und einen carboxylgruppenhaltigen linearen Polyester enthalten. Mit diesen Pulverlacken hergestellte Lackfilme weisen im Vergleich zu Lackfilmen, die unter Verwendung der erfindungsgemäß bereitgestellten Pulverlacke hergestellt worden sind, schlechtere Eigenschaften, insbesondere schlechtere Flexibilitäten und Härten auf.

Das filmbildende Material der erfindungsgemäßen Pulverlacke besteht aus 19,9 bis 90,0, vorzugsweise 39,9 bis 80,0, besonders bevorzugt 49,9 bis 70,0 Gewichtsprozent der Komponente (A), 9,9 bis 80,0, vorzugsweise 19,9 bis 60,0, besonders bevorzugt 29,9 bis 50,0 Gewichtsprozent der Komponente (B), 0 bis 20, vorzugsweise 0,5 bis 10,0, besonders bevorzugt 1,0 bis 5,0 Gewichtsprozent der Komponente (C) und 0,1 bis 3,0, vorzugsweise 0,2 bis 2,0, besonders bevorzugt 0,5 bis 1,5 Gewichtsprozent der Komponente (D), wobei die Gewichtsprozentangaben auf (A) + (B) + (C) + (D) = 100 Gew.-% bezogen sind und die Mischung aus den Komponenten (A), (B), (C) und (D) 0,1 bis 6,0, vorzugsweise 0,2 bis 4,0, besonders bevorzugt 0,3 bis 2,5 Mol ethylenisch ungesättigte Doppelbindungen pro 1000 g Mischung enthält.

Als Komponente (A) kann im Prinzip jedes zur Herstellung von Pulverlacken einsetzbare, gegebenenfalls ethylenisch ungesättigte Doppelbindungen enthaltende, epoxidgruppenhaltige Kunstharz mit einem Schmelzpunkt von 20 bis 100°C, vorzugsweise 30 bis 80, besonders bevorzugt 30 bis 60°C oder eine Mischung aus solchen Kunstharzen eingesetzt werden. Als Beispiele für einsetzbare epoxidgruppenhaltige Kunstharze werden epoxidgruppenhaltige Polyacrylatharze, Polyglycidylether von aliphatischen oder cycloaliphatischen Alkoholen, wie z.B. Ethylenglykol, Diethylenglykol, 1,2-Propylenglykol, 1,4-Butylglykol, 1,2-Cyclohexandiol, 1,4 Cyclohexandiol, 1,2-Bis(hydroxymethyl)cyclohexan und hydriertes Bisphenol A, Polyglycidylether von Polyphenolen wie z.B. Bisphenol A, 1,1-Bis(4-hydroxyphenyl)-ethan und 2-Methyl-1,1-bis(4-hydroxyphenyl)propan sowie die in der US-Patentschrift 4,102,942 in Spalte 3, Zeile 1 bis 16 aufgezählten epoxidgruppenhaltigen Verbindungen genannt.

Als Komponente A) wird vorzugsweise ein epoxidgruppenhaltiges Polyacrylatharz oder eine Mischung aus epoxidgruppenhaltigen Polyacrylatharzen eingesetzt.

Unter einem epoxidgruppenhaltigen Polyacrylatharz wird ein Polymer verstanden, das durch Copolymerisation von mindestens einem ethylenisch ungesättigten Monomer, das mindestens eine Epoxidgruppe im Molekül enthält, mit mindestens einem weiteren ethylenisch ungesättigten Monomer, das keine Epoxidgruppe im Molekül enthält, herstellbar ist, wobei mindestens eines der Monomere ein Ester der Acrylsäure oder Methylacrylsäure ist.

Epoxidgruppenhaltige Polyacrylatharze sind bekannt (vgl. z.B. EP-A-299 420, DE-B-22 14 650, US-A-4,091,048 und US-A-3,781,379).

Als Beispiele für ethylenisch ungesättigte Monomere, die mindestens eine Epoxidgruppe im Molekül enthalten, werden Glycidylacrylat, Glycidylmethacrylat und Allylglycidylether genannt.

Als Beispiele für ethylenisch ungesättigte Monomere, die keine Epoxidgruppe im Molekül enthalten, werden Alkylester der Acryl- und Methacrylsäure, die 1 bis 20 Kohlenstoffatome im Alkylrest enthalten, insbesondere Methylacrylat, Methylmethacrylat, Ethylacrylat, Ethylmethacrylat, Butylacrylat, Butylmethacrylat, 2-Ethylhexylacrylat und 2-Ethylhexylmethacrylat genannt. Weitere Beispiele für ethylenisch ungesättigte Monomere, die keine Epoxidgruppen im Molekül enthalten, sind Säuren, wie z.B. Acrylsäure und Methacrylsäure, Säureamide, wie z.B. Acrylsäure- und Methacrylsäureamid, vinylaromatische Verbindungen, wie Styrol, α-Methylstyrol und Vinyltoluol, Nitrile, wie Acrylnitril und Methacrylnitril, Vinyl- und Vinylidenhalogenide, wie Vinylchlorid und Vinylidenfluorid, Vinylester, wie z.B. Vinylacetat und hydroxylgruppenhaltige Monomere, wie z.B. Hydroxyethylacrylat und Hydroxyethylmethacrylat.

Das epoxidgruppenhaltige Polyacrylatharz weist üblicherweise ein Epoxidäquivalentgewicht von 400 bis 2500, vorzugsweise 500 bis 1500, besonders bevorzugt 600 bis 1200, ein zahlenmittleres Molekulargewicht (gelpermeationschromatisch mit Hilfe eines Polystyrolstandards bestimmt) von 1000 bis 15000, vorzugsweise von 1200 bis 7000, besonders bevorzugt von 1500 bis 5000 und eine Glasübergangstemperatur (T_{G}) von 30 bis 80, vorzugsweise von 40 bis 70, besonders bevorzugt von 40 bis 60°C auf.

Das epoxidgruppenhaltige Polyacrylatharz kann nach allgemein gut bekannten Methoden durch radikalische Polymerisation hergestellt werden.

Ethylenisch ungesättigte Doppelbindungen enthaltende Komponenten (A) können hergestellt werden, indem zur Herstellung der Komponente (A) ethylenisch ungesättigte Doppelbindungen enthaltende Bausteine verwendet werden und/oder indem funktionelle Gruppen, wie z.B. Hydroxylgruppen oder Epoxidgruppen mit Verbindungen, die ethylenisch ungesättigte Doppelbindungen enthalten (z.B. Acrylsäure, Methacrylsäure und ungesättigte Fettsäuren) umgesetzt werden. Bevorzugte ethylenisch ungesättigte Doppelbindungen enthaltende Komponenten (A) werden hergestellt, indem hydroxyl- und/oder epoxidgruppenhaltige Polyacrylatharze mit Acrylsäure, Methacrylsäure oder einer ungesättigten Fettsäure umgesetzt werden.

Die erfindungsgemäßen Pulverlacke können als Komponente (B) im Prinzip jede in Pulverlacken einsetzbare, gegebenenfalls ethylenisch ungesättigte Doppelbindungen enthaltende, carboxylgruppenhaltige Verbindung mit einem Schmelzpunkt von 20 bis 100, vorzugsweise 20 bis 80, besonders bevorzugt 20 bis 60°C oder eine Mischung aus solchen Verbindungen enthalten. Als Beispiele für einsetzbare carboxylgruppenhaltige Verbindungen werden carboxylgruppenhaltige Polyesterharze, Polyanhydride von Polycarbonsäuren, insbesondere Polyanhydride von Dicarbonsäuren genannt. Als Komponente (B) wird vorzugsweise ein carboxylgruppenhaltiges Polyesterharz, eine Mischung aus solchen Polyesterharzen, eine Verbindung, die im statistischen Mittel 1,5 bis 5,0, vorzugsweise 2 bis 4 Carboxylgruppen und 0 bis 20, vorzugsweise 2 bis 15 Säureanhydridgruppen sowie 0 bis 10, vorzugsweise 0 bis 5 ethylenisch ungesättigte Doppelbindungen pro Molekül enthält oder eine Mischung aus solchen Verbindungen eingesetzt. Als Komponente (B) wird ganz besonders bevorzugt eine Mischung aus 95 bis 5, vorzugsweise 95 bis 20, besonders bevorzugt 90 bis 50 Gewichtsprozent eines carboxylgruppenhaltigen Polyesterharzes und 5 bis 95, vorzugsweise 5 bis 80, besonders bevorzugt 10 bis 50 Gewichtsprozent einer Verbindung, die im statistischen Mittel 1,5 bis 5, vorzugsweise 2 bis 4 Carboxylgruppen und 0 bis 20, vorzugsweise 2 bis 15 Säureanhydridgruppen sowie 0 bis 10, vorzugsweise 0 bis 5 ethylenisch ungesättigte Doppelbindungen pro Molekül enthält, eingesetzt, wobei die Summe der Gewichtsanteile stets 100 Gewichtsprozent ergibt.

Als Komponente (B) einsetzbare carboxylgruppenhaltige Polyesterharze können nach gut bekannten Methoden hergestellt werden, indem
(b1) ein gegebenenfalls ethylenisch ungesättigtes Diol oder eine Mischung aus solchen Diolen
(b2) gegebenenfalls eine gegebenenfalls ethylenisch ungesättigte Verbindung, die pro Molekül mindestens drei funktionelle Gruppen, ausgewählt aus Hydroxyl-, primären Amino-, sekundären Amino-, Carboxyl- und Säureanhydridgruppen, wobei eine Säureanhydridgruppe als zu zwei Carboxylgruppen äquivalent angesehen wird, enthält oder eine Mischung aus solchen Verbindungen und
(b3) eine gegebenenfalls ethylenisch ungesättigte Dicarbonsäure, ein gegebenenfalls ethylenisch ungesättigtes Dicarbonsäureanhydrid oder eine Mischung aus solchen Dicarbonsäuren und/oder Dicarbonsäureanhydriden
umgesetzt werden, wobei entweder die carboxylgruppenhaltige Komponente im Überschuß eingesetzt wird oder in einem ersten Schritt ein hydroxylgruppenhaltiges Polyesterharz hergestellt wird, das anschließend mit einem Carbonsäureanhydrid zu einem carboxylgruppenhaltigen Polyesterharz weiter umgesetzt wird. Die als Komponente (B) eingesetzten carboxylgruppenhaltigen Polyesterharze sollen ein zahlenmittleres Molekulargewicht (gelpermeationschromatographisch mit Hilfe eines Polystyrolstandards bestimmt) von 300 bis 5000, vorzugsweise 500 bis 3000, besonders bevorzugt 500 bis 1700, eine Glasübergangstemperatur von 15 bis 100, vorzugsweise 20 bis 80, besonders bevorzugt 20 bis 60°C und eine Säurezahl von 40 bis 300, vorzugsweise 80 bis 250 aufweisen. Besonders bevorzugt eingesetzte carboxylgruppenhaltige Polyesterharze werden erhalten, indem die Komponenten (b1), (b2) und (b3) in einem molaren Verhältnis von (b1) : (b2) : (b3) = 0,0 bis 3,0 : 1,0 : 1,5 bis 9,0, vorzugsweise 0,0 bis 2,0 : 1,0 : 2,0 bis 8,0, besonders bevorzugt 0,5 bis 2,0 : 1,0 : 2,0 bis 6,0 umgesetzt werden.

Die Umsetzung von (b1), (b2) und (b3) wird nach den gut bekannten Methoden der Polyesterharzherstellung durchgeführt. Die Reaktionstemperaturen liegen üblicherweise bei 140 bis 240, vorzugsweise bei 160 bis 200°C.

Als Komponente (b1) wird ein gegebenenfalls ethylenisch ungesättigtes Diol oder eine Mischung aus solchen Diolen eingesetzt. Unter einem Diol wird eine organische Verbindung, die pro Molekül zwei Hydroxylgruppen enthält, verstanden. Beispiele für einsetzbare Diole sind Ethylenglykol, Propylenglykol, Neopentylglykol, 1,6-Hexandiol, Cyclohexandiol, Cyclohexandimethanol, hydriertes Bisphenol-A, Ethylenoxid oder Propylenoxid-Addukte von Bisphenol-A, hydriertem Bisphenol-A und Diethylenglykol.

Als Komponente (b1) werden vorzugsweise aliphatische oder cycloaliphatische Diole mit 2 bis 16, vorzugsweise 2 bis 12 Kohlenstoffatomen im Molekül oder Mischungen aus solchen Diolen eingesetzt.

Als Komponente (b2) wird eine gegebenenfalls ethylenisch ungesättigte Verbindung eingesetzt, die pro Molekül mindestens drei funktionelle Gruppen, ausgewählt aus Hydroxyl-, primären Amino-, sekundären Amino-, Carboxyl- und Säureanhydridgruppen, wobei eine Säureanhydridgruppe als zu zwei Carboxylgruppen äquivalent angesehen wird, enthält oder eine Mischung aus solchen Verbindungen.

Als Komponente (b2) können beispielsweise Verbindungen eingesetzt werden, die pro Molekül mindestens drei Hydroxylgruppen enthalten. Beispiele für solche Verbindungen sind Trimethylolpropan, Pentaerythrit, Trimethylolethan und Glycerin.

Als Komponente (b2) können auch Verbindungen eingesetzt werden, die pro Molekül zwei primäre Amino- und eine Hydroxylgruppe enthalten. Ein Beispiel für eine solche Verbindung ist Diaminopropanol.

Als Komponente (b2) können auch Verbindungen eingesetzt werden, die pro Molekül mindestens drei Carboxyl- bzw. mindestens eine Säureanhydrid- und eine Carboxylgruppe enthalten. Beispiele für derartige Verbindungen sind Trimellithsäure, Trimellithsäureanhydrid, Pyromellitsäure und Pyromellitsäureanhydrid.

Als Komponente (b3) wird eine gegebenenfalls ethylenisch ungesättigte Dicarbonsäure, ein gegebenenfalls ethylenisch ungesättigtes Dicarbonsäureanhydrid oder eine Mischung aus solchen Dicarbonsäuren und/oder Dicarbonsäureanhydriden eingesetzt. Beispiele für einsetzbare Dicarbonsäuren sind gesättigte und ethylenisch ungesättigte aliphatische oder cycloaliphatische Dicarbonsäuren wie Adipinsäure, Sebazinsäure, Azelainsäure, Dodecandisäure, Maleinsäure, Fumarsäure, Bernsteinsäure, Hexahydrophthalsäure und Tetrahydrophthalsäure. Beispiele für einsetzbare Dicarbonsäureanhydride sind die Anhydride der genannten Säuren.

Als Komponente (b3) können auch aromatische Dicarbonsäuren und deren Anhydride, wie z.B. Phthalsäure, Isophthalsäure und Terephthalsäure eingesetzt werden. Der Einsatz von aromatischen Dicarbonsäuren und deren Anhydriden ist weniger bevorzugt.

Als Verbindungen, die im statistischen Mittel 1,5 bis 5,0, vorzugsweise 2,0 bis 4,0 Carboxylgruppen und 0 bis 20, vorzugsweise 2 bis 15 Säureanhydridgruppen sowie 0 bis 10, vorzugsweise 0 bis 5 ethylenisch ungesättigte Doppelbindungen pro Molekül enthalten, können Polyanhydride von gesättigten oder ethylenisch ungesättigten Polycarbonsäuren, insbesondere Dicarbonsäuren oder Polyanhydride von Mischungen aus gesättigten oder ethylenisch ungesättigten Polycarbonsäuren, insbesondere Dicarbonsäuren eingesetzt werden. Derartige Polyanhydride sind herstellbar, indem der Polycarbonsäure bzw. der Mischung aus Polycarbonsäuren Wasser entzogen wird, wobei jeweils zwei Carboxylgruppen zu einer Anhydridgruppe umgesetzt werden. Derartige Herstellungsverfahren sind gut bekannt und brauchen daher nicht näher erläutert werden. Es können auch mit einem Polyol modifizierte Polyanhydride, wie sie in der EP-A-299 420 beschrieben werden, eingesetzt werden, wobei diese Polyolmodifizierung auch während des Extrusionsvorganges geschehen kann.

Als Verbindungen der oben beschriebenen Art werden vorzugsweise lineare Polyanhydride von aliphatischen oder cycloaliphatischen Dicarbonsäuren mit 3 bis 20, vorzugsweise 6 bis 12 Kohlenstoffatomen im Molekül oder lineare Polyanhydride von Mischungen aus solchen Dicarbonsäuren eingesetzt. Konkrete Beispiele für bevorzugt eingesetzte Polyanhydride sind Poly(adipinsäureanhydrid), Poly(acelainsäureanhydrid), Poly(sebazinsäureanhydrid), Poly(dodecandisäureanhydrid) und Poly(cyclohexandicarbonsäureanhydrid).

Als Komponente (C) kann im Prinzip jede ethylenisch ungesättigte Doppelbindungen enthaltende Verbindung, die in Pulverlacken einsetzbar ist oder eine Mischung aus solchen Verbindungen eingesetzt werden. Als Komponente (C) können zum Beispiel eingesetzt werden: Maleinsäureanhydrid, Fumarsäure, Acrylamid, Methacrylamid, Methacrylsäure, Crotonsäure, Methylenbisacrylamid, Methylenbismethacrylamid, Styrol, Methylmethacrylat, Methylacrylat, Butylacrylat, Divinylbenzol, Hexandioldiacrylat, Trimethylolpropantriacrylat und Divinyldioxan. Als Komponente (C) können auch mit Acryl- oder Methacrylsäure modifizierte hydroxylgruppenhaltige Polyurethan-, Polyester- oder Polyacrylatharze eingesetzt werden. Als Komponente (C) wird vorzugsweise Maleinsäureanhydrid eingesetzt.

Als Komponente (D) wird ein Initiator für Radikalkettenpolymerisationen oder eine Mischung aus Initiatoren für Radikalkettenpolymerisationen eingesetzt. Initiatoren für Radikalkettenpolymerisationen sind Verbindungen, die bei erhöhten Temperaturen oder bei Einwirkung von energiereicher Strahlung, insbesondere bei Einwirkung von UV-Strahlung in freie Radikale zerfallen. Diese freien Radikale können Radikalkettenpolymerisationen initiieren. Beispiele für einsetzbare Initiatoren sind Azo-Verbindungen, wie z.B. Azoisobuttersäurenitril, Peroxide, wie z.B. Dibenzoylperoxid, Dilauroylperoxid und Di-tert.-Butylperoxid und Hydroperoxide, wie z.B. Cumolhydroperoxid. Als Komponente (D) werden vorzugsweise Initiatoren eingesetzt, die einen Schmelzpunkt aufweisen, der über 30°C liegt und die bei 120°C eine Halbwertszeit von mindestens 5, vorzugsweise mindestens 20 Minuten aufweisen.

Es ist erfindungswesentlich, daß die Mischung aus den Komponenten (A), (B), (C) und (D) 0,1 bis 6,0, vorzugsweise 0,2 bis 4,0, besonders bevorzugt 0,3 bis 2,5 Mol ethylenisch ungesättigte Doppelbindungen pro 1000 g Mischung enthält, wobei die Komponente (A) 0 bis 50, vorzugsweise 0 bis 10, besonders bevorzugt 0 bis 5 Molprozent, die Komponente (B) 0 bis 100, vorzugsweise 40 bis 100, besonders bevorzugt 60 bis 95 Molprozent und die Komponente (C) 1 bis 100, vorzugsweise 1 bis 60, besonders bevorzugt 5 bis 40 Molprozent der in der Mischung enthaltenen ethylenisch ungesättigten Doppelbindungen enthält.

Die erfindungsgemäßen Pulverlacke können neben dem erfindungsgemäß eingesetzten Gemisch aus den Komponenten (A), (B), (C) und (D) noch weitere für Pulverlacke übliche Bestandteile, wie z.B. Vernetzungskatalysatoren, Pigmente, UV-Stabilisatoren und Verlaufshilfsmittel enthalten.

Die erfindungsgemäßen Pulverlacke können nach allgemein gut bekannten Methoden hergestellt werden. Die Herstellung erfolgt im allgemeinen, indem die Mischung aus den Komponenten (A), (B), (C), (D) gegebenenfalls zusammen mit weiteren üblichen Zusätzen extrudiert wird und das erhaltene Extrudat vermahlen wird. Es ist weiterhin möglich, die Komponente (D) nach dem Extrudieren der Komponenten (A), (B) und (C) zuzugeben und die Komponenten (A), (B), (C) und (D) gemeinsam zu vermahlen.

Die erfindungsgemäßen Pulverlacke können sowohl unpigmentiert (d.h. als Klarlacke) als auch pigmentiert zur Lackierung von beliebigen Substraten, wie z.B. Metall, Holz, Glas oder Kunststoff verwendet werden.

Mit den erfindungsgemäßen Pulverlacken können auch Automobilkarosserien lackiert werden. Sie können insbesondere auch als Klarlacke in Zweischichtlackierungen des base coat/clear coat-Typs eingesetzt werden.

Die Applikation der erfindungsgemäßen Pulverlacke kann mit Hilfe der für Pulverlacke gebräuchlichen Applikationstechniken erfolgen. Die mit den erfindungsgemäßen Pulverlacken hergestellten Lackfilme werden bei 120 bis 220, vorzugsweise 140 bis 200, besonders bevorzugt 140 bis 180°C eingebrannt. Die Einbrenndauer liegt bei 5 bis 60, vorzugsweise 5 bis 30 Minuten. Wenn als Komponente (D) ein mit Hilfe von energiereicher Strahlung, vorzugsweise UV-Strahlung, aktivierbarer Initiatior eingesetzt wird, muß der Lackfilm außerdem noch mit der entsprechenden Strahlung bestrahlt werden. Die Bestrahlung erfolgt vorzugsweise nach dem Einbrennvorgang.

Die Erfindung wird in den folgenden Beispielen näher erläutert. Alle Angaben über Teile und Prozentsätze sind Gewichtsangaben, falls nicht ausdrücklich etwas anderes festgestellt wird.

### 1. Herstellung der Komponente (A)

Zu 30,0 Gewichtsteilen Xylol wird innerhalb von 4 Stunden eine Mischung aus 37,06 Gewichtsteilen Methylmethacrylat, 14,40 Gewichtsteilen Glycidylmethacrylat, 9,00 Gewichtsteilen n-ButyIacrylat und 6,54 Gewichtsteilen Styrol bei 120°C gegeben. Beginnend mit der Zugabe der Monomerenmischung werden 3,0 Teile tert. Butylper-2-ethylhexanoat (TBPEH; Hersteller: Peroxid Chemie) innerhalb von 4,5 Stunden zugegeben. Während der Zugabe der Monomerenmischung und des Peroxids beträgt die Reaktionstemperatur 140°C. Diese Temperatur wird nach Beendigung der Zugabe des Peroxids noch für eine Stunde gehalten. Dann wird das Xylol bei vermindertem Druck entfernt, das Kunstharz auf 180°C erhitzt und aus dem Reaktionsgefäß abgelassen. Das erhaltene Polyacrylatharz weist ein Epoxidäquivalentgewicht von 686 g/mol auf.

### 2. Herstellung der Komponente (B)

2.1 Eine Mischung aus 447 Gewichtsteilen Hexandiol-1,6, 338 Gewichtsteilen Trimethylolpropan, 792 Gewichtsteilen Hexahydrophthalsäureanhydrid und 504 Gewichtsteilen Maleinsäureanhydrid wird langsam aufgeheizt und das entstehende Wasser dem Reaktionsgemisch mit Hilfe eines Wasserabscheiders entzogen. Sobald das Reaktionsprodukt eine Säurezahl von 160 erreicht hat, wird abgekühlt und bei 100°C aus dem Reaktionsgefäß abgelassen. Das so erhaltene radikalisch polymerisierbare Doppelbindungen und Carboxylgruppen enthaltende Polyesterharz weist eine Glasübergangstemperatur (T_{G}) von 20°C auf.

2.2 Eine Mischung aus 722 Gewichtsteilen Hexandiol-1,6, 307 Gewichtsteilen Trimethylolpropan und 1240 Gewichtsteilen Fumarsäure wird langsam aufgeheizt und das entstehende Wasser dem Reaktionsgemisch mit Hilfe eines Wasserabscheiders entzogen. Sobald das Reaktionsprodukt eine Säurezahl von 160 erreicht hat, wird abgekühlt und bei 100°C aus dem Reaktionsgefäß abgelassen. Das so erhaltene radikalisch polymerisierbare Doppelbindungen und Carboxylgruppen enthaltende Polyesterharz weist eine Glasübergangstemperatur (T_{G}) von 22°C auf.

2.3 67,2 Gewichtsteile Dodecandisäure werden zusammen mit 29,8 Gewichtsteilen Essigsäureanhydrid in ein Reaktionsgefäß mit Rückflußkühler eingewogen. Die Mischung wird langsam erhitzt bis Rückfluß einsetzt und 3 Stunden unter Rückfluß belassen. Danach wird die entstandene Essigsäure abdestilliert. Anschließend wird das Reaktionsprodukt nochmals mit 3,00 Gewichtsteilen Essigsäureanhydrid versetzt und für eine Stunde auf Rückflußtemperatur erhitzt. Schließlich wird die entstandene Essigsäure abdestilliert und das Reaktionsprodukt bei 90°C aus dem Reaktionsgefäß abgelassen.

### 3. Herstellung erfindungsgemäßer Pulverlacke

3.1 800 Gewichtsteile der gemäß Punkt 1. hergestellten Komponente (A) werden zusammen mit 280 Gewichtsteilen der gemäß Punkt 2.1 hergestellten Komponente (B), 31 Gewichtsteilen der gemäß Punkt 2.3 hergestellten Komponente (B), 19 Gewichtsteilen Maleinsäureanhydrid, 5 Gewichtsteilen Monobutylzinnoxid, 6 Gewichtsteilen eines Verlaufshilfsmittels auf Polyacrylatharzbasis (Perenol® F 40, Hersteller: Henkel KgaA), 10 Gewichtsteile Benzoin, 26 Gewichtsteilen eines ersten Lichtschutzmittels (Tinuvin® 900, Hersteller: Ciba Geigy AG) und 16 Gewichtsteilen eines zweiten Lichtschutzmittels (Tinuvin® 144, Hersteller: Ciba Geigy AG) in einer Vorschneidemühle zerkleinert und anschließend vorgemischt. Die so erhaltene Mischung wird anschließend in einem Ko-Kneter der Firma Buss (Typ PLK 46) extrudiert, wobei die Temperatur in der Mitte des Extrusionsraumes 90 - 100°C beträgt. Das Extrudat wird schnell auf Raumtemperatur abgekühlt und mit Hilfe einer Vorschneidemühle zerkleinert. Dann werden 5,9 Gewichtsteile Dicumylperoxid (Perkadox BC, Hersteller: Akzo) zugemischt, die so erhaltene Mischung in einer Prall-Mühle (ACM 2L der Firma Hosokawa MikroPul) zu einem Pulver mit einem mittleren Teilchendurchmesser von 30 - 40 µm vermahlen und durch ein Sieb mit einer Porengröße von 125 µm gesiebt.

3.2 800 Gewichtsteile der gemäß Punkt 1. hergestellten Komponente (A) werden zusammen mit 280 Gewichtsteilen der gemäß Punkt 2.1 hergestellten Komponente (B), 31 Gewichtsteilen der gemäß Punkt 2.3 hergestellten Komponente (B), 19 Gewichtsteilen Maleinsäureanhydrid, 5 Gewichtsteilen Monobutylzinnoxid, 6 Gewichtsteilen eines Verlaufsmittels auf Polyacrylatharzbasis (Perenol® F 40, Hersteller: Henkel KgaA), 10 Gewichtsteilen Benzoin und 353 Gewichtsteilen Titandioxid in einer Vorschneidemühle zerkleinert und anschließend vorgemischt. Die so erhaltene Mischung wird anschließend in einem Ko-Kneter der Firma Buss (Typ PLK 46) extrudiert, wobei die Temperatur in der Mitte des Extrusionsraumes 90 - 100°C beträgt. Das Extrudat wird schnell auf Raumtemperatur abgekühlt und mit Hilfe einer Vorschneidemühle zerkleinert (Partikeldurchmesser 1 bis 3 mm). Dann werden 7,6 Gewichtsteile Dicumylperoxid (Perkadox BC, Hersteller: Akzo) zugemischt, die so erhaltene Mischung in einer Prall-Mühle (ACM 2L der Firma Hosokawa MikroPul) zu einem Pulver mit einem mittleren Teilchendurchmesser von 30 - 40 µm vermahlen und durch ein Sieb mit einer Porengröße von 125 µm gesiebt.

3.3 800 Gewichtsteile der gemäß Punkt 1. hergestellten Komponente (A) werden zusammen mit 295 Gewichtsteilen der gemäß Punkt 2.2 hergestellten Komponente (B), 31 Gewichtsteilen der gemäß Punkt 2.3 hergestellten Komponente (B), 19 Gewichtsteilen Maleinsäureanhydrid, 5 Gewichtsteilen Monobutylzinnoxid, 6 Gewichtsteilen eines Verlaufshilfsmittels auf Polyacrylatharzbasis (Perenol® F 40, Hersteller: Henkel KGaA), 10 Gewichtsteilen Benzoin und 358 Gewichtsteilen Titandioxid in einer Vorschneidemühle zerkleinert und anschließend vorgemischt. Die so erhaltene Mischung wird anschließend in einem Ko-Kneter der Firma Buss (Typ PLK 46) extrudiert, wobei die Temperatur in der Mitte des Extrusionsraumes 90 - 100°C beträgt. Das Extrudat wird schnell auf Raumtemperatur abgekühlt und mit Hilfe einer Vorschneidemühle zerkleinert (Partikeldurchmesser 1 bis 3 mm). Dann werden 7,6 Gewichtsteile Dicumylperoxid (Perkadox BC, Hersteller: Akzo) zugemischt und die so erhaltene Mischung in einer Prall-Mühle (ACM 2L der Firma Hosokawa MikroPul) zu einem Pulver mit einem mittleren Teilchendurchmesser von 30 - 40 µm vermahlen und durch ein Sieb mit einer Porengröße von 125 µm gesiebt.

### 4. Applikation der erfindungsgemäßen Pulverlacke

Die gemäß Punkt 3.1, 3.2 und 3.3 hergestellten Pulverlacke werden elektrostatisch auf entfettete Stahlbleche appliziert. Nach der Applikation wird 30 Minuten lang bei 180°C eingebrannt. Die eingebrannten Lackfilme weisen eine Filmdicke von 40 bis 60 µm auf. Sie zeichnen sich insbesondere durch hohe Flexibilität (T-Bend: 2 mm) bei hoher Härte (Bleistifthärte: 3H - 5H, Härte nach Buchholz 100 - 125) aus.

## Patentansprüche

1. Pulverlacke, dadurch gekennzeichnet, daß sie als filmbildendes Material eine Mischung aus
(A) 19,9 bis 90,0 Gewichtsprozent eines gegebenenfalls ethylenisch ungesättigte Doppelbindungen enthaltenden, epoxidgruppenhaltigen Kunstharzes oder einer Mischung aus solchen epoxidgruppenhaltigen Kunstharzen
(B) 9,9 bis 80,0 Gewichtsprozent einer gegebenenfalls ethylenisch ungesättigte Doppelbindungen enthaltenden, carboxylgruppenhaltigen Verbindung oder einer Mischung aus solchen carboxylgruppenhaltigen Verbindungen
(C) 0 bis 20 Gewichtsprozent einer von (A) und (B) verschiedenen, ethylenisch ungesättigte Doppelbindungen enthaltenden Verbindung oder einer Mischung aus solchen Verbindungen und
(D) 0,1 bis 3,0 Gewichtsprozent eines Initiators für Radikalkettenpolymerisationen oder einer Mischung aus Initiatoren für Radikalkettenpolymerisationen
enthalten, wobei die Gewichtsprozentangaben auf (A) + (B) + (C) + (D) = 100 Gew.-% bezogen sind und die Mischung aus den Komponenten (A), (B), (C) und (D) 0,1 bis 6,0 Mol ethylenisch ungesättigte Doppelbindungen pro 1000 g Mischung enthält.

2. Pulverlacke nach Anspruch 1, dadurch gekennzeichnet, daß als filmbildendes Material eine Mischung aus 39,9 bis 80,0, vorzugsweise 49,9 bis 70,0 Gewichtsprozent der Komponente (A), 19,9 bis 60,0, vorzugsweise 29,9 bis 50,0 Gewichtsprozent der Komponente (B), 0,5 bis 10,0, vorzugsweise 1,0 bis 5,0 Gewichtsprozent der Komponente (C) und 0,2 bis 2,0, vorzugsweise 0,5 bis 1,5 Gewichtsprozent der Komponente (D) eingesetzt wird.

3. Pulverlacke nach Anspruch 1 oder 2, dadurch gekennzeichnet, daß als Komponente (A) ein epoxidgruppenhaltiges Polyacrylatharz oder eine Mischung aus epoxidgruppenhaltigen Polyacrylatharzen eingesetzt wird.

4. Pulverlacke nach einem der Ansprüche 1 bis 3, dadurch gekennzeichnet, daß als Komponente (B) ein carboxylgruppenhaltiges Polyesterharz oder eine Mischung aus solchen Polyesterharzen eingesetzt wird.

5. Pulverlacke nach einem der Ansprüche 1 bis 4, dadurch gekennzeichnet, daß als Komponente (B) ein Polyesterharz, das erhältlich ist, indem
(b1) ein gegebenenfalls ethylenisch ungesättigtes Diol oder eine Mischung aus solchen Diolen
(b2) eine gegebenenfalls ethylenisch ungesättigte Verbindung, die pro Molekül mindestens drei funktionelle Gruppen, ausgewählt aus Hydroxyl-, primären Amino-, sekundären Amino-, Carboxyl- und Säureanhydridgruppen, wobei eine Säureanhydridgruppe als zu zwei Carboxylgruppen äquivalent angesehen wird, enthält oder eine Mischung aus solchen Verbindungen und
(b3) eine gegebenenfalls ethylenisch ungesättigte Dicarbonsäure, ein gegebenenfalls ethylenisch ungesättigtes Dicarbonsäureanhydrid oder eine Mischung aus solchen Dicarbonsäuren und/oder Dicarbonsäureanhydriden
in einem Molverhältnis von (b1) : (b2) : (b3) = 0,0 bis 3,0 : 1,0 : 1,5 bis 9,0, vorzugsweise 0,0 bis 2,0 : 1,0 : 2,0 bis 8,0, besonders bevorzugt 0,5 bis 2,0 : 1,0 : 2,0 bis 6,0 zu einem Polyesterharz mit einer Säurezahl von 40 bis 300, vorzugsweise 80 bis 250 umgesetzt werden oder eine Mischung aus solchen Polyesterharzen
eingesetzt wird.

6. Pulverlacke nach einem der Ansprüche 1 bis 5, dadurch gekennzeichnet, daß als Komponente (B) eine Verbindung, die im statistischen Mittel 1,5 bis 5,0, vorzugsweise 2,0 bis 4,0 Carboxylgruppen und 0 bis 20, vorzugsweise 2 bis 15 Säureanhydridgruppen sowie 0 bis 10, vorzugsweise 0 bis 5 ethylenisch ungesättigte Doppelbindungen pro Molekül enthält oder eine Mischung aus solchen Verbindungen eingesetzt wird.

7. Pulverlacke nach einem der Ansprüche 1 bis 6, dadurch gekennzeichnet, daß als Komponente (B) eine Mischung aus 95 bis 5, vorzugsweise 95 bis 20, besonders bevorzugt 90 bis 50 Gewichtsprozent eines Polyesterharzes gemäß Anspruch 5 und 5 bis 95, vorzugsweise 5 bis 80, besonders bevorzugt 10 bis 50 Gewichtsprozent einer Verbindung gemäß Anspruch 6 eingesetzt wird, wobei die Summe der Gewichtsanteile des Polyesterharzes gemäß Anspruch 5 und der Verbindung gemäß Anspruch 6 stets 100 Gew.-% ergibt.

8. Pulverlacke nach einem der Ansprüche 1 bis 7, dadurch gekennzeichnet, daß als Komponente (C) Maleinsäureanhydrid eingesetzt wird.

9. Pulverlacke nach einem der Ansprüche 1 bis 8, dadurch gekennzeichnet, daß die Komponente (D) bei 120°C eine Halbwertzeit von mindestens 5 Minuten aufweist.

10. Pulverlacke nach einem der Ansprüche 1 bis 9, dadurch gekennzeichnet, daß die Mischung aus den Komponenten (A), (B), (C) und (D) 0,2 bis 4,0, vorzugsweise 0,3 bis 2,5 Mol ethylenisch ungesättigte Doppelbindungen pro 1000 g Mischung enthält.

## Claims

1. Powder coatings, characterized in that they contain as film-forming material a mixture of
(A) from 19.9 to 90.0 per cent by weight of a synthetic resin which contains epoxide groups and may contain ethylenically unsaturated double bonds, or of a mixture of such epoxide group-containing synthetic resins,
(B) from 9.9 to 80.0 per cent by weight of a compound which contains carboxyl groups and may contain ethylenically unsaturated double bonds, or of a mixture of such carboxyl group-containing compounds,
(C) from 0 to 20 per cent by weight of a compound which contains ethylenically unsaturated double bonds and is different from (A) and (B), or of a mixture of such compounds, and
(D) from 0.1 to 3.0 per cent by weight of an initiator for free-radical polymerizations or of a mixture of initiators for free-radical polymerizations,
the percentages by weight of (A) + (B) + (C) + (D) being = 100% by weight and the mixture of components (A), (B), (C) and (D) containing from 0.1 to 6.0 mol of ethylenically unsaturated double bonds per 1000 g of mixture.

2. Powder coatings according to Claim 1, characterized in that the film-forming material employed is a mixture of from 39.9 to 80.0 and preferably from 49.9 to 70.0 per cent by weight of component (A), from 19.9 to 60.0 per cent and preferably from 29.9 to 50.0 per cent by weight of component (B), from 0.5 to 10.0 per cent and preferably from 1.0 to 5.0 per cent by weight of component (C) and from 0.2 to 2.0 per cent and preferably from 0.5 to 1.5 per cent by weight of component (D).

3. Powder coatings according to Claim 1 or 2, characterized in that, as component (A), a polyacrylate resin containing epoxide groups or a mixture of polyacrylate resins containing epoxide groups is employed.

4. Powder coatings according to one of Claims 1 to 3, characterized in that, as component (B), a polyester resin containing carboxyl groups or a mixture of such polyester resins is employed.

5. Powder coatings according to one of Claims 1 to 4, characterized in that the polyester resin employed as component (B) is obtainable by reacting
(b1) a diol which may be ethylenically unsaturated, or a mixture of such diols,
(b2) a compound which may be ethylenically unsaturated and which contains per molecule at least three functional groups selected from hydroxyl, primary amino, secondary amino, carboxyl and acid anhydride groups, with one acid anhydride group being regarded as equivalent to two carboxyl groups, or a mixture of such compounds, and
(b3) a dicarboxylic acid which may be ethylenically unsaturated, a dicarboxylic acid anhydride which may be ethylenically unsaturated, or a mixture of such dicarboxylic acids and/or dicarboxylic acid anhydrides
in a molar ratio of (b1):(b2):(b3) = from 0.0 to 3.0:1.0:1.5 to 9.0, preferably from 0.0 to 2.0:1.0:2.0 to 8.0 and particularly preferably from 0.5 to 2.0:1.0:2.0 to 6.0 to give a polyester resin having an acid number of from 40 to 300 and preferably from 80 to 250, or a mixture of such polyester resins.

6. Powder coatings according to one of Claims 1 to 5, characterized in that the compound used as component (B) contains on statistical average from 1.5 to 5.0 and preferably from 2.0 to 4.0 carboxyl groups and from 0 to 20 and preferably from 2 to 15 acid anhydride groups and from 0 to 10 and preferably from 0 to 5 ethylenically unsaturated double bonds per molecule, or a mixture of such compounds.

7. Powder coatings according to one of Claims 1 to 6, characterized in that the mixture used as component (B) contains from 95 to 5 per cent, preferably from 95 to 20 per cent and particularly preferably from 90 to 50 per cent by weight of a polyester resin according to Claim 5, and from 5 to 95 per cent, preferably from 5 to 80 per cent and particularly preferably from 10 to 50 per cent by weight of a compound according to Claim 6, the sum of the proportions by weight of the polyester resin according to Claim 5 and of the compound according to Claim 6 in each case being 100% by weight.

8. Powder coatings according to one of Claims 1 to 7, characterized in that maleic anhydride is employed as component (C).

9. Powder coatings according to one of Claims 1 to 8, characterized in that component (D) has a half-life at 120°C of at least 5 minutes.

10. Powder coatings according to one of Claims 1 to 9, characterized in that the mixture of components (A), (B), (C) and (D) contains from 0.2 to 4.0 mol and preferably from 0.3 to 2.5 mol of ethylenically unsaturated double bonds per 1000 g of mixture.

## Revendications

1. Laques en poudre, caractérisées en ce qu'elles contiennent, en tant que matériau filmogène, un mélange
(A) de 19,9 à 90,0 % en poids d'une résine synthétique contenant des groupements époxydes, contenant, le cas échéant, des liaisons doubles éthyléniquement insaturées, ou un mélange de résines synthétiques contenant des groupements époxydes de ce genre,
(B) de 9,9 à 80,0 % en poids d'un composé contenant des groupements carboxyles, contenant, le cas échéant, des liaisons doubles éthyléniquement insaturées, ou un mélange de composés contenant des groupements carboxyles de ce genre,
(C) de 0 à 20 % en poids d'un composé différent de (A) et de (B), contenant des liaisons doubles éthyléniquement insaturées ou un mélange de composés de ce genre, et
(D) de 0,1 à 3.0 % en poids d'un agent initiateur pour la polymérisation à chaînes de radicaux ou un mélange d'agents initiateurs pour la polymérisation à chaînes de radicaux,
les indications de pourcentage en poids se rapportant à (A) + (B) + (C) + (D) = 100 % en poids, et le mélange des composants (A), (B), (C) et (D) contenant de 0,1 à 6,0 moles de liaisons doubles éthyléniquement insaturées par 1 000 g de mélange.

2. Laques en poudre selon la revendication 1, caractérisées en ce que l'on utilise, en tant que matériau filmogène, un mélange de 39,9 à 80,0, de préférence de 49,9 à 70,0 % en poids du composant (A), de 19,9 à 60,0, de préférence de 29,9 à 50,0 % en poids du composant (B), de 0,5 à 10,0, de préférence de 1,0 à 5,0 % en poids du composant (C) et de 0,2 à 2,0, de préférence de 0,5 à 1,5 % en poids du composant (D).

3. Laques en poudre selon la revendication 1 ou 2, caractérisées en ce que l'on utilise, en tant que composant (A), une résine de polyacrylate contenant des groupements époxydes, ou un mélange de résines polyacrylates contenant des groupements époxydes.

4. Laques en poudre selon l'une quelconque des revendications 1 à 3, caractérisées en ce que l'on utilise, en tant que composant (B), une résine de polyester contenant des groupements carboxyles ou un mélange de résines de polyester de ce genre.

5. Laques en poudre selon l'une quelconque des revendications 1 à 4, caractérisées en ce que l'on utilise, en tant que composant (B), une résine de polyester, que l'on peut obtenir en faisant réagir
(b1) un diol, le cas échéant, éthyléniquement insaturé ou un mélange de diols de ce genre,
(b2) un composé, le cas échéant, éthyléniquement insaturé, qui contient par molécule au moins trois groupements fonctionnels, choisis parmi les groupements hydroxyle, amino primaire, amino secondaire, carboxyle et anhydride d'acide, un groupement d'anhydride d'acide étant considéré comme équivalent à deux groupements carboxyles, ou un mélange de composés de ce genre et
(b3) un acide dicarboxylique, le cas échéant, éthyléniquement insaturé, un anhydride d'acide dicarboxylique, le cas échéant, éthyléniquement insaturé ou un mélange d'acides dicarboxyliques et/ou d'anhydrides d'acide dicarboxylique de ce genre,
dans un rapport molaire de (b1) : (b2) : (b3) = 0,0 à 3,0 : 1,0 : 1,5 à 9,0, de préférence 0,0 à 2,0 : 1,0 : 2,0 à 8,0, en particulier de préférence 0,5 à 2,0 : 1,0 : 2,0 à 6,0, pour former une résine de polyester ayant un indice d'acidité de 40 à 300, de préférence de 80 à 250, ou un mélange de résines de polyester de ce genre.

6. Laques en poudre selon l'une quelconque des revendications 1 à 5, caractérisées en ce que l'on utilise, en tant que composant (B), un composé, qui contient en moyenne statistique de 1,5 à 5,0, de préférence de 2,0 à 4,0 groupements carboxyles et de 0 à 20, de préférence de 2 à 15 groupements d'anhydride d'acide ainsi que de 0 à 10, de préférence de 0 à 5 liaisons doubles éthyléniquement insaturées par molécule, ou un mélange de composés de ce genre.

7. Laques en poudre selon l'une quelconque des revendications 1 à 6, caractérisées en ce que l'on utilise, en tant que composant (B), un mélange de 95 à 5, de préférence de 95 à 20, en particulier de préférence de 90 à 50 % en poids d'une résine de polyester conformément à la revendication 5 et de 5 à 95, de préférence de 5 à 80, en particulier de préférence de 10 à 50 % en poids d'un composé conformément à la revendication 6, la somme des proportions en poids de la résine de polyester conformément à la revendication 5 et du composé conformément à la revendication 6 donnant toujours 100 % en poids.

8. Laques en poudre selon l'une quelconque des revendications 1 à 7, caractérisées en ce que l'on utilise en tant que composant (C) l'anhydride de l'acide maléique.

9. Laques en poudre selon l'une quelconque des revendications 1 à 8, caractérisées en ce que le composant (L) présente une durée de demi-vie d'au moins 5 minutes à 120 C.

10. Laques en poudre selon l'une quelconque des revendications 1 à 9, caractérisées en ce que le mélange des composants (A), (B), (C) et (D) contient de 0,2 à 4,0, de préférence de 0,3 à 2,5 moles de liaisons doubles éthyléniquement insaturées par 1 000 g de mélange.
